# EUROPEAN PATENT APPLICATION

(11) **EP 4 132 203 A1**
(43) Date of publication of application: **08.02.2023**
(21) Application number: 21779730.7
(22) Date of filing: 28.01.2021
(51) Int. Cl.: H04W 76/19, H04W 76/30

(54) **COMMUNICATION METHOD, APPARATUS AND DEVICE, AND STORAGE MEDIUM**

(30) Priority: 01.04.2020 CN 202010251808
(71) Applicant: ZTE Corporation, Shenzhen, Guangdong 518057 (CN)
(72) Inventor: ZHAO, Huijuan, Shenzhen, Guangdong 518057 (CN)
(74) Representative: Ricker, Mathias
(86) International application number: PCT/CN2021/074049
(87) International publication number: WO 2021/196854

(57) **Abstract**

A communication method, a communication apparatus, a communication device, and a storage medium are provided. The communication method includes: receiving a forwarding initiation message sent by a second communication node, where the forwarding initiation message carries a new forwarding address; and initiating a new forwarding process according to the new forwarding address in the forwarding initiation message.

## Description

This application claims the priority to Chinese Patent Application No. 202010251808.2 filed with the Chinese Intellectual Property Administration on April 1, 2020, the disclosure of which is incorporated herein by reference in its entirety.

### TECHNICAL FIELD

The present disclosure relates to the field of communication, for example, to a communication method, a communication apparatus, a communication device and a storage medium.

### BACKGROUND

In order to improve user experience, E-UTRAN-NR dual connectivity (EN-DC) or Multi-RAT dual connectivity (MR-DC) is introduced into a network of the communication system, for using the dual connectivity of radio access technology (RAT) of both the evolved universal terrestrial radio access network (E-UTRAN) and the new radio (NR). In case of a user equipment (UE) with MR-DC capability or EN-DC capability accessing the above network to perform dual-connectivity services, the peak flow of a single user is increased.

In the scenario of EN-DC or MR-DC, if a cross-scenario occurs while a first communication node performs data forwarding, how to notify the first communication node to change the data forwarding to avoid re-establishment failure or data interruption when re-establishment occurs in a non-stable-state process is an issue to be addressed urgently.

### SUMMARY

A communication method, a communication apparatus, a communication device and a storage medium are provided according to the present disclosure, which improves success rate and ensures data continuity in the forwarding process.

A communication method is provided according to embodiments of the present disclosure and is applied to a first communication node, and the communication method includes:
receiving a forwarding initiation message sent by a second communication node, where the forwarding initiation message carries a new forwarding address; and initiating a new forwarding process according to the new forwarding address in the forwarding initiation message.

A communication method is provided according to embodiments of the present disclosure and is applied to a second communication node, and the communication method includes:
sending a forwarding initiation message to a first communication node, where the forwarding initiation message carries a new forwarding address and is used to trigger the first communication node to initiate a new forwarding process.

A communication apparatus is provided according to embodiments of the present disclosure and is applied to a first communication node, and the communication apparatus includes: a receiver and an initiation module.

The receiver is configured to receive a forwarding initiation message sent by a second communication node, where the forwarding initiation message carries a new forwarding address; and the initiation module is configured to initiate a new forwarding process according to the new forwarding address in the forwarding initiation message.

A communication apparatus is provided according to embodiments of the present disclosure and is applied to a second communication node, and the communication apparatus includes a sender.

The sender is configured to send a forwarding initiation message to a first communication node, where the forwarding initiation message carries a new forwarding address and is used to trigger the first communication node to initiate a new forwarding process.

A communication device is provided according to embodiments of the present disclosure, and the communication device includes: a communication module, a memory, and one or more processors. The communication module is configured to perform communication interaction between a first communication node and a second communication node; the memory is configured to store one or more programs; and the one or more processors are configured to execute the one or more programs, to implement the communication method described in any of the foregoing embodiments.

A storage medium is provided according to embodiments of the present disclosure, where a computer program is stored in the storage medium, and the computer program, when being executed by a processor, implements the communication method described in any of the foregoing embodiments.

### BRIEF DESCRIPTION OF DRAWINGS

FIG. 1 is a schematic flowchart showing a scenario where a secondary node (SN) exists in an inter-station handover according to an embodiment of the present disclosure;
FIG. 2 is a schematic flowchart showing another scenario where an SN exists in an inter-station handover according to an embodiment of the present disclosure;
FIG. 3 is a schematic flowchart showing that a re-establishment occurs in a stable state of a UE added with an SN according to an embodiment of the present disclosure;
FIG. 4 is another schematic flowchart showing that a re-establishment occurs in a stable state of a UE added with an SN according to an embodiment of the present disclosure;
FIG. 5 is a schematic flowchart of a communication method according to an embodiment of the present disclosure;
FIG. 6 is another schematic flowchart of a communication method according to an embodiment of the present disclosure;
FIG. 7 is a schematic flowchart showing that in a scenario where an SN exists in an inter-station handover, a re-establishment occurs in a process of a handover according to an embodiment of the present disclosure;
FIG. 8 is another schematic flowchart showing that in a scenario where an SN exists in an inter-station handover, a re-establishment occurs in a process of a handover according to an embodiment of the present disclosure;
FIG. 9 is a structural block diagram of a communication apparatus according to an embodiment of the present disclosure;
FIG. 10 is another structural block diagram of a communication apparatus according to an embodiment of the present disclosure;
FIG. 11 is a schematic structural diagram of a communication device according to an embodiment of the present disclosure.

### DETAILED DESCRIPTION

The embodiments of the present disclosure are described hereinafter with reference to the drawings.

In the network of MR-DC, in a case of a handover process or an SN deletion process or the like of a UE added with an SN, when a packet data convergence protocol (PDCP) entity is changed, it is required to perform data forwarding. In the scenario of EN-DC, a master node (MN) sends a secondary gNodeB (SgNB) release request) to an SN, and carries a forwarding address in the Secondary node release request. In responsive to receiving the SgNB release request, the SN stops transmitting downlink data to the LTE, and initiates a data forwarding. In a scenario of MR-DC under the 5th generation mobile networks core network (5GC), an MN sends an SN release request to an SN to notify the SN to stop forwarding downlink data to the UE, and also sends an Xn-U address indication message to the SN, where the forwarding address is carried in the address indication message. In a case where the UE needs to perform re-establishment in the subsequent operations of this process, the MN determines whether to preempt the current process according to a physical cell identifier (ID) carried in a re-establishment request.

In a handover process, in case that the air-interface handover fails when the UE performs re-establishment, and in case that the failure in the process has not been recognized by an SN on a network side, the SN on the network side still continues the handover process. In case that the re-established target packet data convergence protocol (PDCP) entity is changed, it is required to notify the SN of a new data forwarding address one more time. In a standard protocol, the method about notifying the SN to change data forwarding is not defined for a cross-flow process, which results in failure of re-establishment or interruption of data flow when re-establishment occurs in an unstable process.

In the standard protocol, it is defined that a forwarding address is carried in a SgNB release confirm or a SgNB release request message sent by an MN to an SN in the scenario of EN-DC and that the forwarding address is carried in an Xn-U address indication message sent by an MN to an SN in the scenario of MR-DC under the 5GC. The protocol does not define a scenario that in a case where a re-establishment occurs after the above-mentioned message carrying a forwarding address is sent to the SN but before a UE context release message is sent to the SN, it is required to interrupt the current process and is turned to perform the re-establishment immediately, and in the re-establishment process, it is required to send a new forwarding address to the SN one more time. For a UE added with an SN, an MN is required to send an SgNB release request message to the SN in a handover process, for example, in a scenario where the SN changes in an intra-station handover, or in a scenario where the SN exists in the inter-station handover. In the present disclosure, the scenario where the SN changes in the inter-station handover is taken as an example.

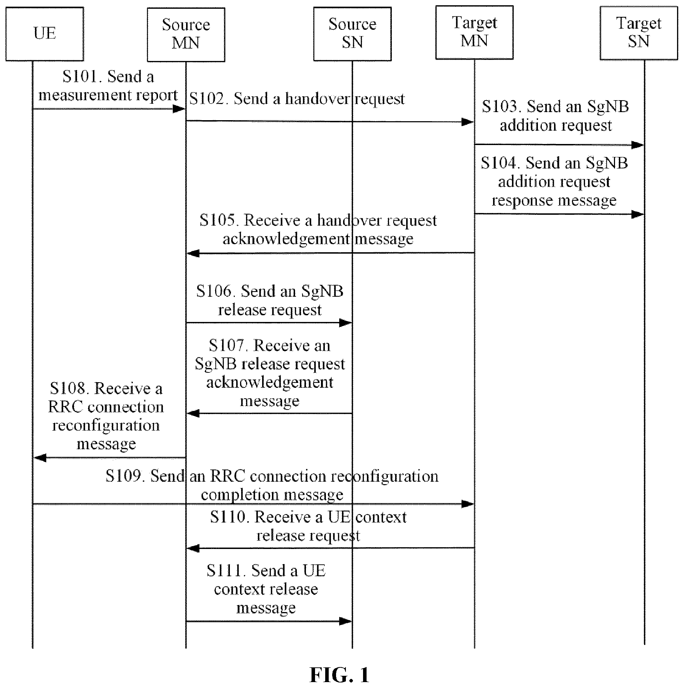

In an implementation, FIG. 1 is a schematic flowchart showing a scenario where an SN exists in an inter-station handover according to an embodiment of the present disclosure. As shown in FIG. 1, in this embodiment, the scenario of EN-DC where an SN exists in an inter-station handover is taken as an example. As shown in FIG. 1, the process according to this embodiment includes: operations S101-S111.

The operation S101 includes: sending a measurement report.

The operation S102 includes: sending a handover request.

The operation S103 includes: sending an SgNB addition request.

The operation S104 includes: sending an SgNB addition request response message.

The operation S105 includes: receiving a handover request acknowledge message.

The operation S106 includes: sending an SgNB release request.

The operation S107includes: receiving an SgNB release request acknowledge message.

The operation S108 includes: receiving a radio resource control (RRC) connection reconfiguration message.

The operation S109 includes: sending an RRC connection reconfiguration completion message.

The operation S110 includes: receiving a UE context release request.

The operation S111 includes: sending a UE context release message.

In the scenario of EN-DC, since the SN is changed, the source MN sends an SgNB release request to the source SN to notify the SN side to stop sending downlink data, and carries new forwarding address in the sent SgNB release request, to initiate a data forwarding from the source SN to a target SN.

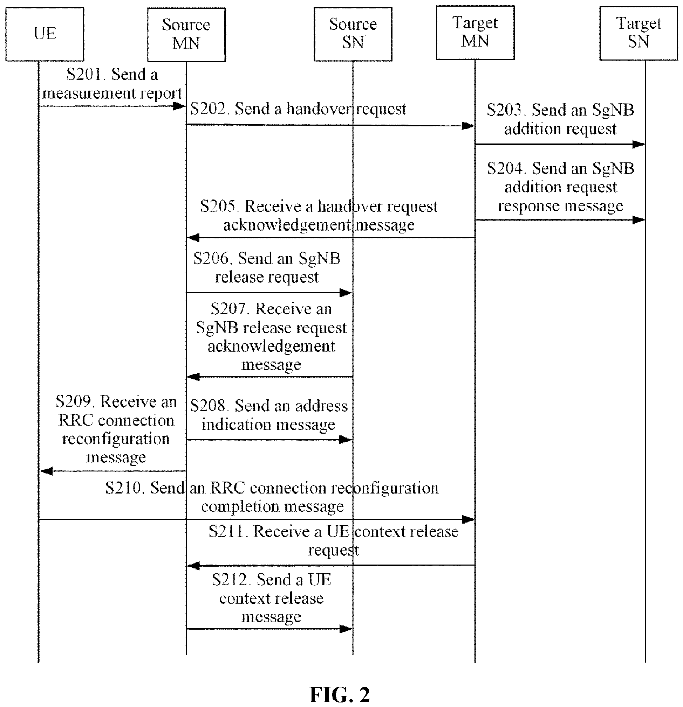

In an implementation, FIG. 2 is a schematic flowchart showing another scenario where an SN exists in an inter-station handover according to an embodiment of the present disclosure. As shown in FIG. 2, in this embodiment, a scenario where an SN exists in an inter-station handover in the scenario of MR-DC under the 5GC is taken as an example. As shown in FIG. 2, the process according to this embodiment includes: operations S201-S212.

The operation S201includes: sending a measurement report.

The operation S202includes: sending a handover request.

The operation S203includes: sending an SgNB addition request.

The operation S204includes: sending an SgNB addition request response message.

The operation S205includes: receiving a handover request acknowledge message.

The operation S206includes: sending an SgNB release request.

The operation S207includes: receiving an SgNB release request acknowledge message.

The operation S208includes: sending an address indication message

The operation S209includes: receiving an RRC connection reconfiguration message.

The operation S210includes: sending an RRC connection reconfiguration completion message.

The operation S211includes: receiving a UE context release request.

The operation S212includes: sending a UE context release message.

In the scenario of MR-DC under the 5GC, since the SN is changed, the source MN sends an SgNB release request to the source SN to notify the SN to stop sending downlink data, and sends an address indication message to the source SN, where a new forwarding address is carried in the address indication message and is used to initiate a data forwarding from the source SN to a target SN.

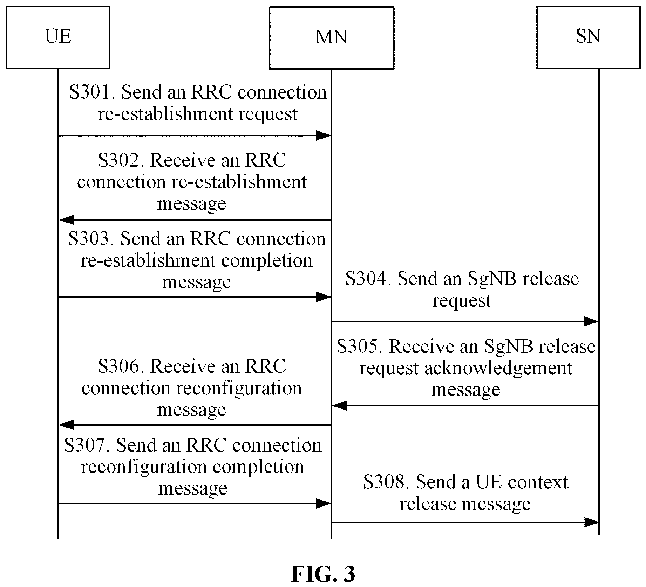

In an implementation, FIG. 3 is a schematic flowchart showing that a re-establishment occurs in a stable state of a UE added with an SN according to an embodiment of the present disclosure. As shown in FIG. 3, in this embodiment, re-establishment in a stable state of UE added with an SN in the scenario of EN-DC is taken as an example. As shown in FIG. 3, the process according to this embodiment includes: operations S301-S308.

The operation S301 includes: sending an RRC connection re-establishment request.

The operation S302 includes: receiving an RRC connection re-establishment message.

The operation S303 includes: sending an RRC connection re-establishment completion message.

The operation S304 includes: sending an SgNB release request.

The operation S305 includes: receiving an SgNB release request acknowledge message.

The operation S306 includes: receiving an RRC connection reconfiguration message.

The operation S307 includes: sending an RRC connection reconfiguration completion message.

The operation S308 includes: sending a UE context release message.

In the embodiment, a UE, after being added with an SN, performs a re-establishment process, and deletes the SN in the process of the re-establishment, and forwards data from the SN to the MN in the process.

As shown in FIG. 3, in the scenario of EN-DC, the MN sends an SgNB release request to the SN, and the forwarding address is carried in the SgNB release request.

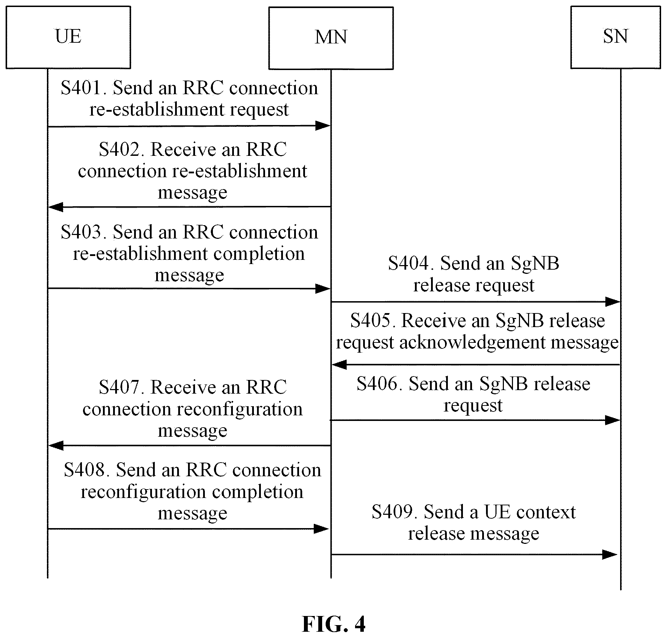

In an implementation, FIG. 4 is another schematic flowchart showing that a re-establishment occurs in a stable state of a UE added with an SN according to an embodiment of the present disclosure. As shown in FIG. 4, in this embodiment, re-establishment in a stable state of UE added with an SN in the scenario of MR-DC under the 5GC is taken as an example. As shown in FIG. 4, the process according to this embodiment includes: operations S401-S409.

The operation S401 includes: sending an RRC connection re-establishment request.

The operation S402 includes: receiving an RRC connection re-establishment message.

The operation S403 includes: sending an RRC connection re-establishment completion message.

The operation S404 includes: sending an SgNB release request.

The operation S405 includes: receiving an SgNB release request acknowledge message.

The operation S406 includes: sending an address indication message.

The operation S407 includes: receiving an RRC connection reconfiguration message.

The operation S408 includes: sending an RRC connection reconfiguration completion message.

The operation S409 includes: sending a UE context release message.

In the embodiment, in the scenario of MR-DC under the 5GC, the MN sends an address indication message to the SN, and the forwarding address is carried in the address indication message.

In a process where an inter-station handover occurs and the SN changes after the UE is added with the SN, after an SN release acknowledge message is sent from the SN to the MN, a data forwarding from the source SN to a target SN is initiated. In the following, the UE performs re-establishment, and the LTE is re-established to the source MN by carrying a physical cell ID of a source side of the handover, and in this case, the MN is required to preempt the current handover process and turned to respond to the re-establishment immediately. In the protocol, it is specified that the resources on the SN side should be deleted in the re-establishment process. Therefore, the data forwarding from the source SN to the source MN should be completed in the re-establishment process. However, how to notify the SN to change the forwarding address in this cross-flow is an urgent issue to be addressed.

A communication method is provided according to the present disclosure, to improve the success rate and ensure the data continuity in the forwarding process.

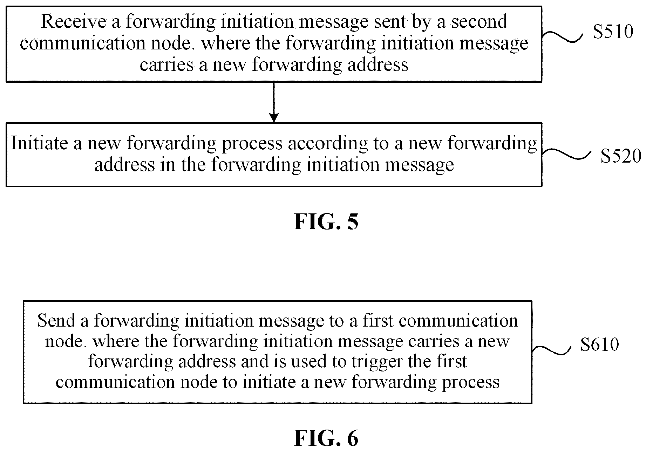

FIG. 5 is a schematic flowchart of a communication method according to an embodiment of the present disclosure. This embodiment is applied to a first communication node. Exemplarily, the first communication node may be a secondary node (e.g., SN1). As shown in FIG. 5, the method in this embodiment includes operations S510-S520.

The operation S510 includes: receiving a forwarding initiation message sent by a second communication node, where the forwarding initiation message carries a new forwarding address.

The operation S520 includes: initiating a new forwarding process according to a new forwarding address in the forwarding initiation message.

In the embodiment, the forwarding initiation message carries a new forwarding address, and after the first communication node receives the forwarding initiation message sent by the second communication node, the first communication node initiates a new forwarding process according to the new forwarding address in the forwarding initiation message, to improve the success rate and ensure the data continuity in the forwarding process.

In an embodiment, the receiving a forwarding initiation message sent by a second communication node includes: receiving the forwarding initiation message sent by the second communication node in a case where a destination forwarding address is changed in the process of data forwarding. In the embodiment, the destination forwarding address refers to the address of another node to which the forwarding is switched from this node in the process of data forwarding.

In an embodiment, the destination forwarding address is changed in one of: a case where the first communication node executes a handover process, and a case where the first communication node executes a deletion process.

In an embodiment, in the scenario of EN-DC, the receiving a forwarding initiation message sent by a second communication node includes: receiving a first secondary node release request sent by the second communication node, where the first secondary node release request carries a new forwarding address.

In an embodiment, in the scenario of MR-DC, the receiving a forwarding initiation message sent by a second communication node includes: receiving an address indication message sent by a second communication node, where the address indication message carries a new forwarding address.

In an embodiment, before the receiving an address indication message sent by a second communication node, the method further includes: receiving a second secondary node release request sent by a second communication node; and sending a second secondary node release request acknowledge message to the second communication node.

In an embodiment, the communication method applied to the first communication node further includes: after receiving the forwarding initiation message, backing up forwarding data in the current forwarding process performed by the first communication node.

In an embodiment, after backing up the forwarding data of the first communication node itself, the method further includes: receiving a LTE context release message sent by the second communication node; and clearing the forwarding data in the current forwarding process performed by the first communication node.

FIG. 6 is another schematic flowchart of a communication method according to an embodiment of the present disclosure. This embodiment is applied to a second communication node. Exemplarily, the second communication node may be a master node (e.g., MN). As shown in FIG. 6, the process according to this embodiment includes operation S610.

The operation S610 includes: sending a forwarding initiation message to a first communication node, where the forwarding initiation message carries a new forwarding address and is used to trigger the first communication node to initiate a new forwarding process.

In an embodiment, the sending a forwarding initiation message to a first communication node includes: in a case where the destination forwarding address changes in the process of the data forwarding performed by the first communication node, sending the forwarding initiation message to the first communication node.

In an embodiment, in a scenario of EN-DC, the sending a forwarding initiation message to a first communication node includes: sending a first secondary node release request to a first communication node, where the first secondary node release request carries a new forwarding address.

In an embodiment, in the scenario of MR-DC, the sending a forwarding initiation message to a first communication node includes: sending an address indication message to a first communication node, where the address indication message carries a new forwarding address.

In an embodiment, the communication method applied to a second communication node further includes: sending a UE context release message to the first communication node.

In an implementation, the present disclosure proposes a method in which the MN sends an SgNB release request, an SgNB release confirm or an Xn-U address indication to the SN, thereafter, the current process is preempted and it is required to notify the SN side to initiate a forwarding to a new forwarding address, which ensures data continuity. When sending a message carrying a forwarding address to the SN for the first time to notify the SN to initiate a data forwarding, it is required the SN side to back up data while initiating the forwarding, and clear the data after receiving the LTE context release message. If a cross-flow occurs during the data forwarding and the target entity of the data forwarding needs to be changed, the MN sends a message carrying a forwarding address to the SN again. After receiving the message, the SN side, in case of finding that the data forwarding is already in progress, stops the current data forwarding process, and initiates a new data forwarding to the new target address. The message of changing the data forwarding address can be carried in the following messages: the SgNB release request message in the scenario of EN-DC, or, the address indication message in the scenario of MR-DC under the 5GC.

The data forwarding process in the cross-scenario of the scenario of EN-DC and the scenario of MR-DC under the 5GC can be illustrated for example by the following.

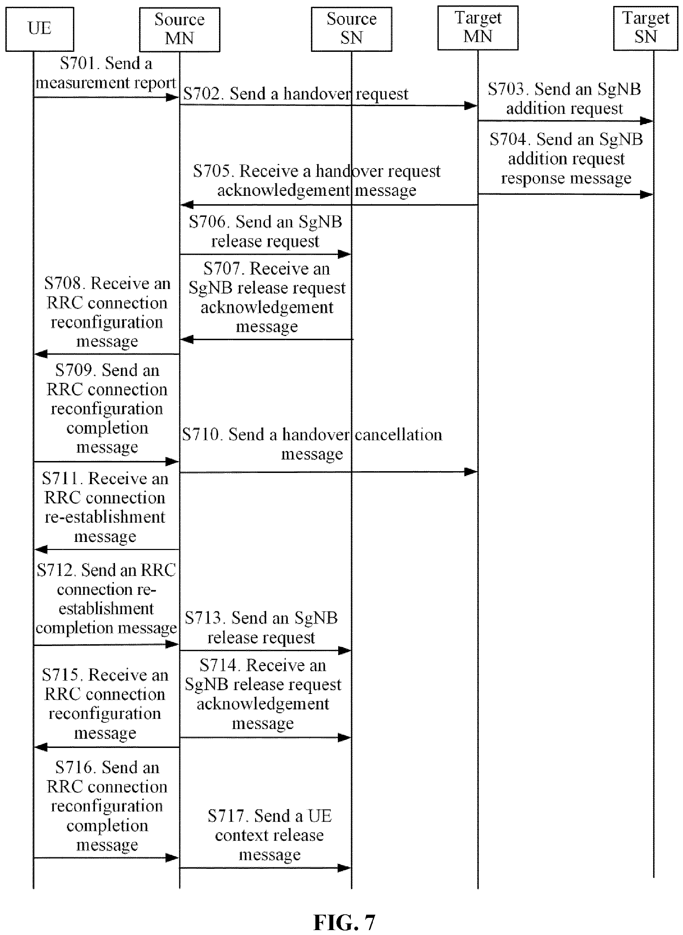

In an implementation, FIG. 7 is a schematic flowchart showing that in a scenario where an SN exists in an inter-station handover, a re-establishment occurs in a process of a handover according to an embodiment of the present disclosure. As shown in FIG. 7, in this embodiment, re-establishment occurring in the process of handover of SN in the scenario of EN-DC is taken as an example. Exemplarily, the first communication node is a source SN, and the second communication node is a source MN. As shown in FIG. 7, the process according to this embodiment includes: operations S701-S717.

The operation S701 includes: sending a measurement report.

The operation S702 includes: sending a handover request.

The operation S703 includes: sending an SgNB addition request.

The operation S704 includes: sending an SgNB addition request response message.

The operation S705 includes: receiving a handover request acknowledge message.

The operation S706 includes: sending an SgNB release request.

The operation S707 includes: receiving an SgNB release request acknowledge message.

The operation S708 includes: receiving an RRC connection reconfiguration message.

The operation S709 includes: sending an RRC connection reconfiguration completion message.

The operation S710 includes: sending a handover cancellation message.

The operation S711 includes: receiving an RRC connection re-establishment message.

The operation S712 includes: sending an RRC connection re-establishment completion message.

The operation S713 includes: sending an SgNB release request (i.e. includes: the first secondary node release request in the foregoing embodiment).

The operation S714 includes: receiving an SgNB release request acknowledge message.

The operation S715 includes: receiving an RRC connection reconfiguration message.

The operation S716 includes: sending an RRC connection reconfiguration completion message.

The operation S717 includes: sending a UE context release message.

In the embodiment, in the scenario of EN-DC, the source SN, after receiving the SgNB release request (i.e., the operation S706) in the handover process, initiates a data forwarding from the source SN to a target SN according to data forwarding information in the SgNB release request, and in this case, the source SN backs up forwarding data. When re-establishment occurs for the UE, since the UE carries a physical cell ID of the handover source side, it is required to send a handover cancellation message to the target MN to cancel the current handover process and quickly respond to the re-establishment. Since a data forwarding from the source SN to the source MN needs to be initiated for the re-establishment, and in the re-establishment process, the source MN sends an SgNB release request to the source SN again in the operation S713, and carries a new forwarding address in the SgNB release request in the operation S713, to notify the source SN to stop forwarding data to the target SN in the handover process, and re-initiate a data forwarding to the source MN.

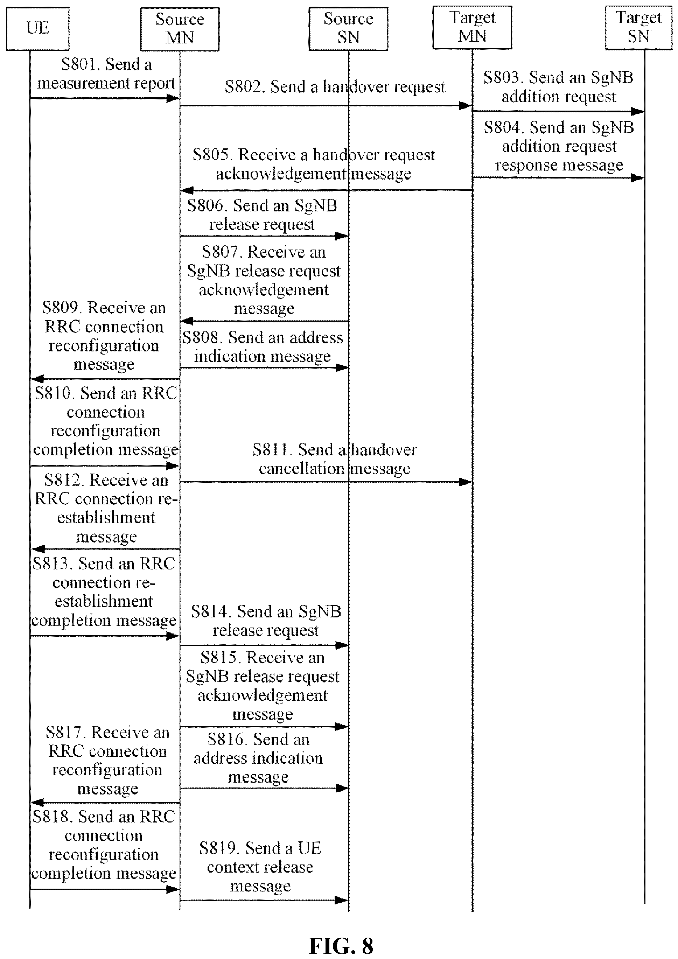

In an implementation, FIG. 8 is another schematic flowchart showing that in a scenario where an SN exists in an inter-station handover, a re-establishment occurs in a process of a handover according to an embodiment of the present disclosure. As shown in FIG. 8, this embodiment is an example in which re-establishment occurs in the process of handover of SN in the scenario of MR-DC under the 5GC. Exemplarily, the first communication node is a source SN, and the second communication node is a source MN. As shown in FIG. 8, the process according to this embodiment includes: operations S801-S817.

The operation S801 includes: sending a measurement report.

The operation S802 includes: sending a handover request.

The operation S803 includes: sending an SgNB addition request.

The operation S804 includes: sending an SgNB addition request response message.

The operation S805 includes: receiving a handover request acknowledge message.

The operation S806 includes: sending an SgNB release request.

The operation S807 includes: receiving an SgNB release request acknowledge message.

The operation S808 includes: sending an address indication message.

The operation S809 includes: receiving an RRC connection reconfiguration message.

The operation S810 includes: sending an RRC connection reconfiguration completion message.

The operation S811 includes: sending a handover cancellation message.

The operation S812 includes: receiving an RRC connection re-establishment message.

The operation S813 includes: sending an RRC connection re-establishment completion message.

The operation S814 includes: sending an SgNB release request (i.e., includes: the second secondary node release request in the above embodiments).

The operation S815 includes: receiving an SgNB release request acknowledge message.

The operation S816 includes: sending an address indication message (that is includes: the address indication message carrying a new forwarding address in the above embodiments).

The operation S817 includes: receiving an RRC connection reconfiguration message.

The operation S818 includes: sending an RRC connection reconfiguration completion message.

The operation S819 includes: sending a UE context release message.

In this embodiment, in the scenario of MR-DC under the 5GC, the source SN, after receiving an address indication message in the handover process, initiates a data forwarding from the source SN to a target SN. The scenario of EN-DC in this embodiment is same as that described above, and also in this case, the source SN backs up forwarding data. The LTE, in a case of performing re-establishment, also cancels a current handover process, quickly responses the re-establishment, and re-initiates a data forwarding from the source SN to the source MN. In the operation S816 for the re-establishment process, the source MN sends an address indication message to the source SN again, and has a new forwarding address carried in the address indication message, to notify the source SN to stop forwarding data to the target SN in the handover process and to re-initiate data forwarding to the source MN.

In the network of EN-DC or MR-DC in the embodiments of the present disclosure, and in the cross-flow and data forwarding process, processing is performed for the case where the forwarding address changes. After the MN sends the SgNB release request, SgNB release confirm or Xn-U address indication to the SN, in the process of data forwarding on the SN side, if other process occurs and it is required to change the forwarding address, the MN again notifies the SN to initiate a new forwarding, which involves backing up of forwarding data and processing of signaling process, and includes: the first communication node (e. g., the source SN in the above embodiments) backs up data while it initiates a new forwarding process, and clears data till the UE context release message is received.

When the second communication node (for example, the source MN in the above embodiments) sends an SgNB release request (the first secondary node release request in the operation S713 of the above embodiments) or Xn-U address indication message (the address indication message in the operation S816 of the above embodiments) carrying a new forwarding address again to the first communication node to notify the first communication node to stop the current data forwarding to a third communication node and re-initiate the forwarding to the second communication node. In the embodiments, in the scenario of EN-DC, the second communication node sends a first secondary node release request carrying a new forwarding address to the first communication node; and in the scenario of MR-DC, the second communication node sends an address indication message carrying a new forwarding address to the first communication node.

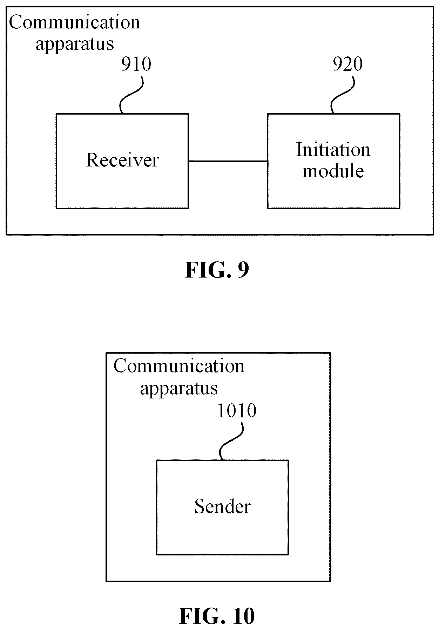

FIG. 9 is a structural block diagram of a communication apparatus according to an embodiment of the present disclosure. This embodiment is applied to a first communication node. As shown in FIG. 9, the communication apparatus according to this embodiment includes: a receiver 910 and an initiation module 920.

The receiver 910 is configured to receive a forwarding initiation message sent by a second communication node, and the forwarding initiation message carries a new forwarding address; and, the initiation module 920 is configured to initiate a new forwarding process according to the new forwarding address in the forwarding initiation message.

The communication apparatus according to this embodiment is configured to implement the communication method applied to the first communication node in the embodiment as shown in FIG. 5. The implementation principles and technical effects of the communication apparatus according to this embodiment are similar to those of the communication method, and are not repeatedly described herein.

In an embodiment, the receiving a forwarding initiation message sent by a second communication node includes: receiving the forwarding initiation message sent by the second communication node in a case where a destination forwarding address is changed in the process of data forwarding.

In an embodiment, the destination forwarding address is changed in one of: a case where the first communication node executes a handover process, and a case where the first communication node executes a deletion process.

In an embodiment, the receiving a forwarding initiation message sent by a second communication node includes: in the scenario of EN-DC, receiving a first secondary node release request sent by the second communication node, where the first secondary node release request carries a new forwarding address.

In an embodiment, the receiving a forwarding initiation message sent by a second communication node includes: in the scenario of MR-DC, receiving an address indication message sent by a second communication node, where the address indication message carries a new forwarding address.

In an embodiment, before receiving the address indication message sent by the second communication node, the receiver 910 is further configured to: receive a second secondary node release request sent by a second communication node; and send a second secondary node release request acknowledge message to the second communication node.

In an embodiment, the communication method applied to the first communication node further includes: after the forwarding initiation message is received, backing up forwarding data in the current forwarding process performed by the first communication node.

In an embodiment, after the forwarding data of the first communication node itself has been backup, the receiver 910 is further configured to: receive a user equipment (UE) context release message sent by the second communication node; and clear the forwarding data in the current forwarding process performed by the first communication node.

FIG. 10 is another structural block diagram of a communication apparatus according to an embodiment of the present disclosure. This embodiment is applied to a second communication node. As shown in FIG. 10, this embodiment includes a sender 1010.

The sender 1010 is configured to send a forwarding initiation message to a first communication node, where the forwarding initiation message carries a new forwarding address and is used to trigger the first communication node to initiate a new forwarding process.

The communication apparatus according to this embodiment is configured to implement the communication method applied to the second communication node in the embodiment shown in FIG. 6. The implementation principles and technical effects of the communication apparatus according to this embodiment are similar to those of the communication method, and are not repeatedly described herein.

In an embodiment, the sending a forwarding initiation message to a first communication node includes: in a case where the destination forwarding address changes in the process of the data forwarding performed by the first communication node, sending the forwarding initiation message to the first communication node.

In an embodiment, the sending a forwarding initiation message to a first communication node includes: in the scenario of EN-DC, sending a first secondary node release request to a first communication node, where the first secondary node release request carries a new forwarding address.

In an embodiment, the sending a forwarding initiation message to a first communication node includes: in the scenario of MR-DC, sending an address indication message to a first communication node, where the address indication message carries a new forwarding address.

In an embodiment, the communication method applied to a second communication node further includes: sending a UE context release message to the first communication node.

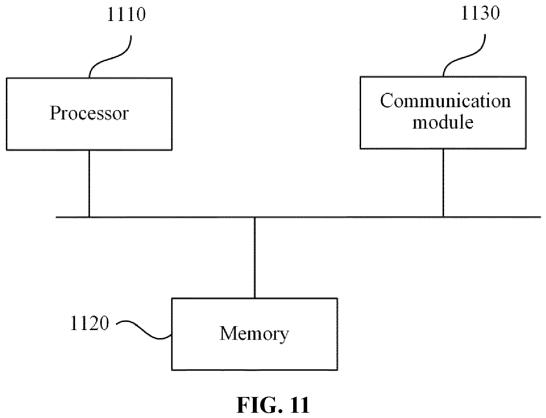

FIG. 11 is a schematic structural diagram of a communication device according to an embodiment of the present disclosure. As shown in FIG. 11, the device according to the present disclosure includes a processor 1110, a memory 1120 and a communication module 1130. The device may include one or more processors 1110, and a case where one processor 1110 is included is taken as an example in FIG. 11. The communication device may include one or more memories 1120, and a case where one memory 1120 is included is taken as an example in FIG. 11. The processor 1110, the memory 1120 and the communication module 1130 in the communication device may be connected via a bus or via other means, and the connection via a bus is taken as an example in FIG. 11. In this embodiment, the communication device may be a first communication node.

As a computer-readable storage medium, the memory 1120 may be configured to store a software program, a computer-executable program and a module, such as the program instructions/module corresponding to the device according to any embodiment of the present disclosure (e.g., the receiver and initiation module in the communication device applied in the first communication node). The memory 1120 may include a program storage area and a data storage area, where the program storage area may store an operating system and at least one application program required by functions, the data storage area may store data created during a utilization of the device, and etc. furthermore, the memory 1120 may include a high-speed random access memory, and may further include a non-volatile memory, such as at least one magnetic disk storage apparatus, a flash memory device, or other non-volatile solid-state storage apparatus. In some examples, the memory 1120 may include memories which are remotely provided with respect to the processor(s) 1110, and these remote memories may be connected to the device through a network. Examples of the aforementioned network include, but are not limited to, the Internet, an intranet, a local area network, a mobile communication network, or any combination thereof.

The communication module 1130 is configured to perform communication and interaction between the first communication node and the second communication node.

The device provided as described above can be configured to execute the communication method applied to the first communication node according to any of the above embodiments, and has corresponding functions and effects to the method.

In a case where the device is a second communication node, the device provided as described above can be configured to execute the communication method applied to the second communication node according to any of the above embodiments, and has corresponding functions and effects to the method.

A storage medium containing computer-executable instructions is further provided according to embodiments of the present disclosure, where the computer-executable instructions are used to execute a communication method applied to a first communication node when the instructions are executed by a computer processor. The communication method includes: receiving a forwarding initiation message sent by a second communication node, the forwarding initiation message carrying a new forwarding address; and initiating a new forwarding process according to the new forwarding address in the forwarding initiation message.

A storage medium containing computer-executable instructions is further provided according to embodiments of the present disclosure, where the computer-executable instructions are used to execute a communication method applied to a second communication node when the instructions are executed by a computer processor. The communication method includes: sending a forwarding initiation message to a first communication node, where the forwarding initiation message carries a new forwarding address; and is used to trigger the first communication node to initiate a new forwarding process.

The term "user equipment" encompasses any appropriate type of radio user device, such as a mobile phone, a portable data processing apparatus, a portable web browser, or a vehicle-mounted mobile station.

Generally speaking, the various embodiments of the present disclosure may be implemented in hardware or a dedicated circuit, software, logic, or any combination thereof. For example, some aspects of the various embodiments may be implemented in hardware, while other aspects of the various embodiments may be implemented in firmware or software that may be executed by a controller, a microprocessor, or other computing apparatuses, and the present disclosure is not limited thereto.

Embodiments of the present disclosure may be implemented by a data processor of a mobile apparatus executing computer program instructions, for example, the embodiments of the present disclosure may be implemented in a processor entity, by hardware, or by a combination of software and hardware. The computer program instructions may be assembly instructions, instruction set architecture (ISA) instructions, machine instructions, machine-related instructions, micro-codes, firmware instructions, state setting data, or source codes or object codes written in any combination of one or more programming languages.

The block diagrams of any logic flow in drawings of the present disclosure may represent program steps, or may represent interconnected logic circuits, modules, and functions, or may represent a combination of program steps, logic circuits, modules, and functions. The computer programs may be stored in a memory. The memory may be of any type suitable for a local technical environment and may be implemented using any suitable data storage technology, such as, but not limited to, a read-only memory (ROM), a random-access memory (RAM) and an optical memory apparatus and system (digital video disc (DVD) or compact disc (CD). The computer-readable storage medium may include a non-transitory storage medium. The data processor may be of any type appropriate for the local technical environment such as, but not limited to, a general-purpose computer, a special purpose computer, a microprocessor, a digital signal processor (DSP), an application specific integrated circuit (ASIC), a field-programmable gate array (FPGA), or a processor based on a multi-core processor architecture.

## Claims

1. A communication method, applied to a first communication node, comprising:
receiving a forwarding initiation message sent by a second communication node, wherein the forwarding initiation message carries a new forwarding address; and
initiating a new forwarding process according to the new forwarding address in the forwarding initiation message.

2. The method according to claim 1, wherein the receiving a forwarding initiation message sent by a second communication node comprises:
in a case where a destination forwarding address changes in a process of data forwarding, receiving the forwarding initiation message sent by the second communication node.

3. The method according to claim 2, wherein the destination forwarding address changes in one of a case where the first communication node executes a handover process, or, a case where the first communication node executes a deletion process.

4. The method according to any one of claims 1 to 3, wherein the receiving a forwarding initiation message sent by a second communication node, comprise:
in a scenario of evolved universal terrestrial radio access network, E-UTRAN, new radio, NR, dual connectivity, EN-DC, receiving a first secondary node release request sent by the second communication node, wherein the first secondary node release request carries the new forwarding address.

5. The method according to any one of claims 1 to 3, wherein the receiving a forwarding initiation message sent by a second communication node comprises:
in a scenario of multi-radio access technology dual-connectivity, MR-DC, receiving an address indication message sent by the second communication node, wherein the address indication message carries the new forwarding address.

6. The method according to claim 5, wherein before the receiving the address indication message sent by the second communication node, the method further comprises:
receiving a second secondary node release request sent by the second communication node; and
sending a second secondary node release request acknowledge message to the second communication node.

7. The method according to claim 1, further comprising:
after receiving the forwarding initiation message, backing up forwarding data in a current forwarding process performed by the first communication node.

8. The method according to claim 7, wherein after the backing up forwarding data in a current forwarding process performed by the first communication node, the method further comprises:
receiving a user equipment, UE, context release message sent by the second communication node; and
clearing the forwarding data in the current forwarding process performed by the first communication node.

9. A communication method, applied to a second communication node, comprising:
sending a forwarding initiation message to a first communication node, wherein the forwarding initiation message carries a new forwarding address and is used to trigger the first communication node to initiate a new forwarding process.

10. The method according to claim 9, wherein the sending a forwarding initiation message to a first communication node comprises:
in a case where a destination forwarding address changes in a process of data forwarding performed by the first communication node, sending the forwarding initiation message to the first communication node.

11. The method according to claim 9, wherein the sending a forwarding initiation message to a first communication node comprises:
in a scenario of evolved universal terrestrial radio access network, E-UTRAN, new radio, NR, dual connectivity, EN-DC, sending a first secondary node release request to the first communication node, wherein the first secondary node release request carries the new forwarding address.

12. The method according to claim 9, wherein the sending a forwarding initiation message to a first communication node comprises:
in a scenario of multi-radio access technology dual-connectivity, MR-DC, sending an address indication message to the first communication node, wherein the address indication message carries the new forwarding address.

13. The method according to claim 9, further comprising:
sending a user equipment, UE, context release message to the first communication node.

14. A communication apparatus, applied to a first communication node, comprising:
a receiver, configured to receive a forwarding initiation message sent by a second communication node, wherein the forwarding initiation message carries a new forwarding address; and
an initiation module, configured to initiate a new forwarding process according to the new forwarding address in the forwarding initiation message.

15. A communication apparatus, applied to a second communication node, comprising:
a sender, configured to send a forwarding initiation message to a first communication node, wherein the forwarding initiation message carries a new forwarding address and is used to trigger the first communication node to initiate a new forwarding process.

16. A communication device, comprising: a communication module, a memory, and at least one processor, wherein
the communication module is configured to perform communication interaction between a first communication node and a second communication node; and
the memory is configured to store at least one program; and
the at least one processor is configured to execute the at least one program to implement the communication method according to any one of claims 1 to 13.

17. A storage medium, storing a computer program, wherein the computer program, when being executed by a processor, implements the communication method according to any one of claims 1 to 13.
